# EUROPÄISCHE PATENTSCHRIFT

(11) **EP 0 934 816 B1**
(45) Veröffentlichungstag und Bekanntmachung des Hinweises auf die Patenterteilung: **15.05.2002**
(21) Anmeldenummer: 99101381.4
(22) Anmeldetag: 26.01.1999
(51) Int. Cl.: B29C 65/10, B29D 23/00

(54) **Verfahren und Vorrichtung zur Herstellung eines kontinuierlichen Folienschlauchs aus einer ebenen Folienbahn**
Process and apparatus for manufacturing a continuous tubular sheath from a film web
Dispositif et procédé pour la fabrication d'une gaine tubulaire continue à partir d'une bande de film

(30) Priorität: 04.02.1998 DE 19804221
(43) Veröffentlichungstag der Anmeldung: 11.08.1999
(73) Patentinhaber: Natec Reich, Summer GmbH & Co. KG, 88178 Heimenkirch (DE)
(72) Erfinder: Zeuschner, Roland, 88260 Argenbühl-Siggen (DE)
(74) Vertreter: Riebling, Peter, Dr.-Ing.

(56) Entgegenhaltungen:
- EP-A- 0 355 347
- CA-A- 1 248 437
- DE-A- 2 630 460
- DE-A- 19 508 155
- US-A- 4 054 474
- US-A- 4 308 087
- US-A- 4 485 613
- PATENT ABSTRACTS OF JAPAN vol. 098, no. 012, 31. Oktober 1998 & JP 10 194217 A (ISHIDA CO LTD), 28. Juli 1998
- PATENT ABSTRACTS OF JAPAN vol. 010, no. 242 (M-509), 21. August 1986 & JP 61 072524 A (KEIICHI ISOTANI), 14. April 1986
- PATENT ABSTRACTS OF JAPAN vol. 018, no. 065 (M-1554), 3. Februar 1994 & JP 05 286025 A (FURUKAWA ELECTRIC CO LTD:THE), 2. November 1993

## Beschreibung

Die Erfindung betrifft ein Verfahren und eine Vorrichtung zur Herstellung eines kontinuierlichen Folienschlauchs aus einer ebenen Folienbahn nach dem Oberbegriff der unabhängigen Patentansprüche 1 und 7.

Eine derartige Vorrichtung und ein Verfahren zur Herstellung eines Folienschlauchs ist z. B. aus der DE 38 41 056 A1 bekannt. Es wird hier eine ebene Folie durch eine Formeinrichtung zu einem längsseitigen offenen Folienschlauch mit sich überlappenden Folienrändern geformt, wobei der Folienschlauch nachfolgend kontinuierlich einer Siegelstation zugeführt wird, welche die sich überlappenden Folienränder miteinander verschweißt. Die Siegelstation besteht dabei aus einem Heizkörper in Form einer Siegelbacke, welche die sich überlappenden Ränder des Folienschlauchs unter Druck verschweißt.
Nachteilig hierbei ist, daß durch die ständige Berührung der Folie mit der Siegelbacke Verschleiß an Folie und der Siegelbacke auftritt, wobei im Bereich der Siegelnaht eine Schwächung der Folie durch die Kerbwirkung der Siegelbacke hervorgerufen wird. Ferner ist die Geschwindigkeit des Siegelns und der durchlaufenden Folienbahn nach oben hin begrenzt, um ein fehlerfreies Siegeln zu erreichen und eine Beschädigung des durchlaufendes Folienschlauchs zu verhindern.

Aus der JP 10 194 217 A geht ein Folienschweißverfahren hervor, das zwar Heißluft zum Verschweißen der Folienränder zu Hilfe nimmt, das jedoch zwei Führungsblöcke aufweist, welche die Folienränder gegeneinander preßt wodurch sich ebenfalls ein die Folie berührendes Schweißverfahren ergibt.

Aus der DE 195 08 155 A1 ist ein Stand der Technik gemäß dem Oberbegriff der Ansprüche 1 und 7 zu entnehmen, der ein Verfahren und eine Vorrichtung zum Herstellen von Kunststoffverpackungen für Lebensmittel offenbart. Darin wird ein Folienschweißverfahren beschrieben bei dem mittels Heißluft die beiden vom den Schlauch bildenden Anteil der Folie abstehenden Enden soweit erhitzt werden, daß diese sich verflüssigen. Anschließend wird mittels Zuführung kalter Druckluft dieses verflüssigte Kunststoffgemisch soweit abgekühlt daß es sich wieder verfestigt.

Aus der CA 1 248 437 geht eine Folienschweißanlage hervor, die dazu dient, zwei oder mehr übereinanderliegende Folien miteinander zu verschweißen. Dazu werden zwischen zwei Platten die zu verschweißenden Folien hindurchgeführt und mittels erhitzen Gases miteinander Verschmolzen. An der Seite an der das heiße Gas zugeführt wird ist zusätzlich zu einer der Gaszufuhrseite gegenüberliegenden Seite eine weitere Platte erforderlich um einen verlaufenden Druckausgleich zu bewirken, so dass die Folien nicht flattern und nicht beschädigt werden.

Der Erfindung liegt deshalb die Aufgabe zugrunde, ein Verfahren und eine Vorrichtung zur Herstellung eines kontinuierlichen Folienschlauchs vorzuschlagen, welches verschleißfrei arbeitet, eine hohe Durchlaufgeschwindigkeit der Folie erlaubt und eine Schwächung oder Beschädigung der Folie verhindert.

Diese Aufgabe wird durch die kennzeichnenden Merkmale der unabhängigen Patentansprüche 1 und 7 gelöst.

Wesentliches Merkmal der vorliegenden Erfindung ist, daß das Verschweißen der sich überlappenden Folienränder berührungslos durch Heißluft erfolgt.

Weiterbildungen und vorteilhafte Ausgestaltungen der Erfindung sind Gegenstand der abhängigen Patentansprüche.

So ist es z. B. vorgesehen, daß die Heißluft zum Verschweißen der Folie aus gewöhnlicher Druckluft erzeugt wird, die durch geeignete Heizeinrichtungen auf eine Temperatur von ca. 170 ° Celsius aufgeheizt wird und über Düsen dem Folienschlauch zugeführt wird. Dabei ist die Temperatur und/oder Menge der zugeführten Heißluft regelbar und schnell an die erforderlichen Verhältnisse anpaßbar.

Vorzugsweise wird die Temperatur der Heißluft im Auslaßkanal durch einen Temperatursensor gemessen und in Abhängigkeit davon die Heizleistung der Heizeinrichtung geregelt.

Die Siegeleinrichtung umfaßt ein Gehäuse mit mindestens einem Lufteinlaß für die Druckluft, wobei sich die Druckluft innerhalb des Gehäuses in einer Reihe von Verteilerkanälen verzweigt, wobei die Luft dann von den Verteilerkanälen über Überströmkanäle mindestens einer Heizeinrichtung zugeführt wird. Die dort aufgeheizte Luft wird wiederum über Überströmkanäle dem Auslaßkanal zugeführt und über Düsen auf den Folienschlauch aufgebracht.

Die Siegeleinrichtung, das heißt die Auslaßdüsen für die Heißluft sind in einem definierten Abstand zum Folienschlauch angeordnet und berühren diesen nicht.

Die Heizeinrichtung besteht aus einer elektrisch betriebenen Heizpatrone, die Heizwendeln umfasst, die von der einströmenden Luft umströmt werden, so daß die kalte Luft über die elektrisch betriebenen Heizwendeln aufgeheizt wird.

Wesentlicher Vorteil des Siegelns mit Heißluft ist, daß dünnere Folien zur Herstellung des Folienschlauches verwendet werden können, da keine Berührung zwischen Folie und Siegeleinrichtung stattfindet. Dadurch ergibt sich eine wesentliche Kostenersparnis beim Folienmaterial. Weiterer Vorteil ist, daß das Verschweißen quasi verschleißfrei für die Siegeleinrichtung durchgeführt wird, da die Siegeleinrichtung nicht mit dem Folienschlauch in Berührung kommt. Ferner kann die Heizleistung der Siegeleinrichtung schnell an sich verändernde Gegebenheiten, wie z. B. Änderungen der Foliendicke etc. angepaßt werden. Verschiedene Parameter der Siegeleinrichtung wie z. B. Temperatur, Druck der einströmenden kalten Druckluft und Durchflußvolumen der Druckluft können in weiten Bereichen eingestellt werden. Vorteilhaft erfolgt jedoch die Steuerung der Heizleistung lediglich durch Variierung des Drucks bzw. des Durchflußvolumens, wobei die Temperatur konstant bleibt und beispielsweise auf etwa konstant 170 ° Celsius gehalten wird.

Weiterer Vorteil dieser Einrichtung ist, daß eine schmalere Folienbahn eingesetzt werden kann, um Folienschläuche mit gleichem Durchmesser wie beim Stand der Technik, bei dem mit Siegelbacken gearbeitet wird, zu erreichen. Dies ist möglich, da hier keine Kontaktschweißung vorliegt, sondern berührungslos und im wesentlichen punktgenau geschweißt werden kann. Es erfolgt auch keine Schwächung der zu schweißenden Folie im Bereich der Schweißnaht, da keine Siegelbacken eingesetzt werden, die eine Kerbwirkung an der Schweißnaht verursachen. Durch das berührungslose Schweißen kann die Geschwindigkeit des durchlaufenden Folienschlauchs erhöht werden.

Nachfolgend wird die Erfindung unter Bezugnahme auf Zeichnungsfiguren anhand eines Ausführungsbeispiels näher erläutert.

Es zeigen:
- Figur 1:: Einen seitlichen Schnitt der Vorrichtung zur Herstellung eines Folienschlauchs;
- Figur 2:: eine Stirnansicht der Siegeleinrichtung mit Blick auf die Auslaßdüsen.

Die ebene Folienbahn 1, welche vorzugsweise aus Kunststoff besteht, wird von einer Spule (nicht dargestellt) abgewickelt und gelangt kontinuierlich zu einer Formeinrichtung bestehend aus einer Formschulter, durch welche die ebene Folienbahn zu einem längsseitig offenen Folienschlauch 3 mit sich überlappenden Folienrändern geformt wird und auf einem zylindrischen Formrohr 4 in Transportrichtung 25 weiter transportiert wird. Die Formschulter 2 und das Formrohr 4 sind in einer Halterung 5 gehalten.

Das Formrohr 4 erstreckt sich weiter in Transportrichtung 25 in den Bereich der Siegeleinrichtung 9, welche an einer Aufhängung 6 am Maschinengehäuse befestigt ist. Die Aufhängung 6 ist um eine vertikale Achse drehbar in einem Schwenklager 7 gelagert, wobei die Aufhängung 6 durch eine Befestigungsschraube 11 arretiert werden kann, die Teil eines an der Halterung 5 befestigten Schwenkarmes 10 ist. Damit wird die Aufhängung 6 fest mit der Halterung 5 verbunden, um ein unbeabsichtigtes Schwenken zu verhindern.

Das Gehäuse 14 der eigentlichen Siegeleinrichtung ist über einen Befestigungsarm 8 mit der Aufhängung 6 verbunden. Es sind verschiedene Einstellvorrichtungen vorgesehen, um eine Ausrichtung des Gehäuses 14 gegenüber dem Formrohr 4 vornehmen zu können. Es ist eine Anschlageinstellung 12 vorhanden, welche sich am Maschinengehäuse abstützt und durch welche der Abstand des Gehäuses 15 der Siegeleinrichtung zum Formrohr 4 eingestellt werden kann. Ferner ist eine Neigungsverstellung 13 vorgesehen, mittels welcher die Neigung des Gehäuses 14 gegenüber zur Achse des Formrohrs 4 eingestellt werden kann. Dadurch kann ein gleichmäßiger Abstand zwischen Gehäuse 14 der Siegeleinrichtung und Formrohr 4 über die Länge des Formrohrs eingestellt werden.

Das Gehäuse 14 der Siegeleinrichtung 9 weist mindestens einen Lufteinlaß 15 auf, wobei die eintretende Druckluft mittels baumartig sich verzweigenden Verteilerkanälen 16 innerhalb des Gehäuses 14 verteilt wird und räumlich verteilt über Überströmkanäle 19 der Heizeinrichtung zugeführt wird. Die Heizeinrichtung besteht z. B. aus einer ersten Heizpatrone 17 an welche sich eine zweite Heizpatrone 18 anschließt. Die Heizpatronen 17, 18 sind etwa rohrförmig ausgebildet und besitzen eine Heizwendel, welche die in das innere Volumen der Heizpatrone einströmende Druckluft erwärmt. Die erwärmte Heißluft verläßt die Heizpatrone 18 über Überströmkanäle 20 und gelangt zu einem Auslaßkanal 21, der in Längsrichtung parallel zum Formrohr 4 angeordnet ist.

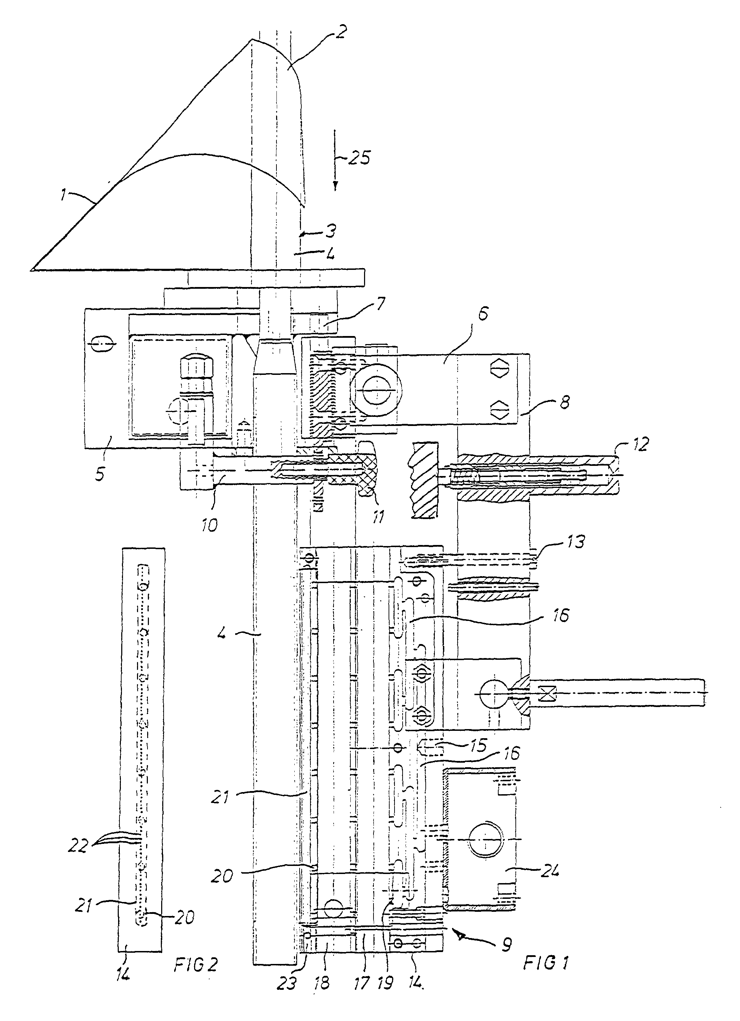

Wie in Figur 2 dargestellt ist, besitzt der Auslaßkanal 21 auf der dem Formrohr 4 zugewandten Seite eine Vielzahl von Auslaßdüsen 22, durch welche die Heißluft austritt und auf dem am Formrohr 4 entlanggeführten Folienschlauch 3 auftrifft. Der Folienschlauch 3 ist dabei so auf dem Formrohr 4 ausgerichtet, daß die sich überlappenden Folienränder gegenüber den Auslaßdüsen 22 zu liegen kommen und durch die austretende Heißluft kontinuierlich miteinander verschweißt werden. Wesentlich ist, daß die Siegeleinrichtung 9 die Oberfläche des Folienschlauchs nicht berührt, sondern das Verschweißen berührungslos stattfindet.

Im Bereich des Auslaßkanals 21 ist ein Temperatursensor 23 angeordnet, mittels welchem die Temperatur der Heißluft im Auslaßkanal 21 gemessen wird. In Abhängigkeit von der gemessenen Temperatur wird die Heizleistung der Heizpatronen 17, 18 geregelt und so eine dem voreingestellten Wert entsprechende konstante Temperatur der Heißluft erzielt.

Die erforderliche Elektrik und Elektronik für die Siegeleinrichtung befindet sich vorteilhaft in einem separaten Gehäuse 24, was den Zugriff und die Wartung der Elektrik erleichtert.

### Zeichnungslegende

- 1: Folienbahn
- 2: Formschulter
- 3: Folienschlauch (offen)
- 4: Formrohr
- 5: Halterung (f. Formschulter u. Formrohr)
- 6: Aufhängung (f. Siegeleinr.)
- 7: Schwenklager
- 8: Befestigungsarm
- 9: Siegeleinrichtung
- 10: Schwenkarm (an Halterung)
- 11: Befestigungsschraube
- 12: Anschlagseinstellung
- 13: Neigungsverstellung
- 14: Gehäuse d. Siegeleinrichtung
- 15: Einlaß f. Heißluft
- 16: Verteilerkanäle
- 17: Heizpatrone
- 18: Heizpatrone
- 19: Überströmkanäle
- 20: Überströmkanäle
- 21: Auslaßkanal
- 22: Auslaßdüsen
- 23: Temperatursensor
- 24: Gehäuse (für Elektrik)
- 25: Transportrichtung

## Patentansprüche

1. Verfahren zur Herstellung eines kontinuierlichen Folienschlauchs (3) aus einer ebenen Folienbahn (1), die durch eine Formeinrichtung, bestehend aus einer Formschulter (2) und einem Formrohr (4), zu einem längsseitig offenen Folienschlauch mit sich überlappenden Folienrändern geformt wird, wobei der Folienschlauch kontinuierlich einer Siegeleinrichtung (9), zugeführt wird, welche die sich überlappenden Folienränder längsseitig berührungslos durch Heißluft miteinander verschweißt, **dadurch gekennzeichnet, daß** die Heißluft aus einem, auf den über dem Formrohr (4) aufgezogenen Folienschlauch (3) hin ausgerichteten, eine Vielzahl von Auslaßdüsen (22) aufweisenden Auslaßkanal (21) tritt.

2. Verfahren nach Anspruch 1, **dadurch gekennzeichnet, daß** die Heißluft aus gewöhnlicher Druckluft erzeugt wird, die durch geeignete Heizeinrichtungen aufgeheizt und über Düsen dem Folienschlauch (3) zugeführt wird.

3. Verfahren nach einem der Ansprüche 1 oder 2, **dadurch gekennzeichnet, daß** die Heißluft mittels einer Reihe von Auslaßdüsen (22) gleichzeitig auf eine bestimme Länge des Folienschlauchs (3) gerichtet wird.

4. Verfahren nach einem der Ansprüche 1 bis 3, **dadurch gekennzeichnet, daß** die Temperatur und/oder die Menge der zugeführten Heißluft regelbar und schnell an die erforderlichen Verhältnisse anpassbar ist.

5. Verfahren nach einem der Ansprüche 1 bis 4, **dadurch gekennzeichnet, daß** die Temperatur der Heißluft im Auslaßkanal durch einen Temperatursensor gemessen und in Abhängigkeit davon die Heizleistung der Heizeinrichtung geregelt wird.

6. Verfahren nach einem der Ansprüche 1 bis 5, **dadurch gekennzeichnet, daß** die Temperatur der Heißluft konstant bleibt und auf etwa konstant 170 °C gehalten wird.

7. Vorrichtung zur Herstellung eines kontinuierlichen Folienschlauchs (3) aus einer ebenen Folienbahn (1), die durch eine Formeinrichtung, bestehend aus einer Formschulter (2) und einem Formrohr (4), zu einem längsseitig offenen Folienschlauch mit sich überlappenden Folienrändern geformt wird, wobei der Folienschlauch kontinuierlich einer Siegeleinrichtung (9) zugeführt wird, welche die sich überlappenden Folienränder längsseitig berührungslos durch Heißluft miteinander verschweißt, **dadurch gekennzeichnet, daß** der Auslaßkanal (21) der Siegeleinrichtung (9) auf den über dem Formrohr (4) aufgezogenen Folienschlauch hin ausgerichtet ist und eine Vielzahl von Auslaßdüsen (22) aufweist, durch welche die zum Folienschlauch (3) geformte Folie (1) mittels der austretenden Heißluft verschweißt wird.

8. Vorrichtung nach Anspruch 7, **dadurch gekennzeichnet, daß** die Siegeleinrichtung (9) ein Gehäuse (14) mit mindestens einem Lufteinlaß (15) aufweist, welcher sich in Verteilerkanäle (16) verzweigt, die über Überströmkanäle (19) mit mindestens einer Heizeinrichtung (17; 18) verbunden sind, die wiederum über Überströmkanäle (20) mit einem Auslaßkanal (21) verbunden ist.

9. Vorrichtung nach einem der Ansprüche 7 oder 8, **dadurch gekennzeichnet, daß** der Auslaßkanal (21) sich über eine gewisse Länge in Längsrichtung des Folienschlauchs (3) erstreckt.

10. Vorrichtung nach einem der Ansprüche 7 bis 9, **dadurch gekennzeichnet, daß** die Siegeleinrichtung (9) in einem definierten Abstand zum Folienschlauch (3) angeordnet ist und diesen nicht berührt.

11. Vorrichtung nach einem der Ansprüche 7 bis 10, **dadurch gekennzeichnet, daß** die Heizeinrichtung (17; 18) aus einer elektrisch betriebenen Heizpatrone besteht.

12. Vorrichtung nach einem der Ansprüche 7 bis 11, **dadurch gekennzeichnet, daß** im Bereich des Auslaßkanals (21) ein Temperatursensor (23) angeordnet ist.

## Claims

1. Method for the manufacture of a continuous foil tube (3) from a flat foil web (1) which is formed by a forming device consisting of a forming shoulder (2) and a forming tube (4) into a foil tube open along its longitudinal side and with overlapping foil edges, wherein the foil tube is continuously fed to a sealing device (9) which contactlessly welds the overlapping foil edges along the longitudinal side by means of hot air, **characterized in that** the hot air is discharged from an outlet duct (21) which is aligned with the foil tube (3) drawn over the forming tube (4) and which has a plurality of outlet nozzles (22).

2. Method according to Claim 1, **characterized in that** the hot air is generated from ordinary compressed air which is heated by suitable heating devices and delivered by nozzles to the foil tube (3).

3. Method according to Claim 1 or Claim 2, **characterized in that** the hot air is directed simultaneously on to a specific length of the foil tube (3) by means of a row of outlet nozzles (22).

4. Method according to any one of Claims 1 to 3, **characterized in that** the temperature and/or flow of the hot air supplied is adjustable and rapidly adaptable to the conditions required.

5. Method according to any one of Claims 1 to 4, **characterized in that** the temperature of the hot air in the outlet duct is measured by a temperature sensor and the heat output of the heating device is regulated as a function of the measurement obtained.

6. Method according to any one of Claims 1 to 5, **characterized in that** the temperature of the hot air remains constant and is kept at a steady level of about 170°C.

7. Apparatus for the manufacture of a continuous foil tube (3) from a flat foil web (1) which is formed by a forming device consisting of a forming shoulder (2) and a forming tube (4) into a foil tube open along its longitudinal side and with overlapping foil edges, wherein the foil tube is continuously fed to a sealing device (9) which contactlessly welds the overlapping foil edges along the longitudinal side by means of hot air, **characterized in that** the outlet duct (21) of the sealing device (9) is aligned with the foil tube drawn over the forming tube (4) and has a plurality of outlet nozzles (22) through which the foil (1) formed into the foil tube (3) is welded by the discharged hot air.

8. Apparatus according to Claim 7, **characterized in that** the sealing device (9) has a casing (14) with at least one air inlet (15) branching into distributor passageways (16) connected by transfer passages (19) to at least one heater device (17; 18) connected in turn by transfer passages (20) to an outlet duct (21).

9. Apparatus according to Claim 7 or Claim 8, **characterized in that** the outlet duct (21) extends over a certain length in the longitudinal direction of the foil tube (3).

10. Apparatus according to any one of Claims 7 to 9, **characterized in that** the sealing device (9) is arranged at a defined distance from the foil tube (3) and does not come in contact with the latter.

11. Apparatus according to any one of Claims 7 to 10, **characterized in that** the heating device (17; 18) consists of an electric cartridge type heater.

12. Apparatus according to any one of Claims 7 to 11, **characterized in that** a temperature sensor (23) is arranged in the region of the outlet duct (21).

## Revendications

1. Procédé pour fabriquer une gaine tubulaire continue (3) à partir d'une feuille en bande plane (1) qui est transformée par un dispositif de formage comprenant un épaulement de formage (2) et un tube de formage (4) en une gaine tubulaire ouverte sur son côté longitudinal, avec des bords qui se recouvrent, selon lequel la gaine est amenée en continu dans un dispositif de scellage (9) qui soude longitudinalement sans contact, avec de l'air chaud, les bords de la feuille qui se recouvrent, **caractérisé en ce que** l'air chaud sort d'un conduit de sortie (21) qui est dirigé vers la gaine tubulaire (3) tendue sur le tube de formage (4), et qui comprend une multiplicité de buses de sortie (22).

2. Procédé selon la revendication 1, **caractérisé en ce que** l'air chaud est produit à partir d'air comprimé ordinaire, qui est chauffé par des dispositifs de chauffage adéquats et qui est amené par des buses vers la gaine tubulaire (3).

3. Procédé selon la revendication 1 ou 2, **caractérisé en ce que** l'air chaud, grâce à une série de buses de sortie (22), est dirigé simultanément vers une longueur définie de la gaine tubulaire (3).

4. Procédé selon l'une des revendications 1 à 3, **caractérisé en ce que** la température et/ou la quantité d'air chaud amené peuvent être adaptées de manière réglable et rapidement aux conditions requises.

5. Procédé selon l'une des revendications 1 à 4, **caractérisé en ce que** la température de l'air chaud est mesurée dans le conduit de sortie par un capteur de température, et en fonction de cette mesure, la puissance de chauffage du dispositif de chauffage est réglée.

6. Procédé selon l'une des revendications 1 à 5, **caractérisé en ce que** la température de l'air chaud reste constante et est maintenue à une température constante d'environ 170°C.

7. Dispositif pour fabriquer une gaine tubulaire continue (3) à partir d'une feuille en bande plane (1) qui est transformée par un dispositif de formage comprenant un épaulement de formage (2) et un tube de formage (4) en une gaine tubulaire ouverte sur son côté longitudinal, avec des bords qui se recouvrent, selon lequel la gaine tubulaire est amenée en continu dans un dispositif de scellage (9) qui soude longitudinalement sans contact, avec de l'air chaud, les bords de la feuille qui se recouvrent, **caractérisé en ce que** le conduit de sortie (21) du dispositif de scellage (9) est dirigé vers la gaine tubulaire tendue sur le tube de formage (4) et comprend une multiplicité de buses de sortie (22) grâce auxquelles la feuille (1) transformée en gaine tubulaire (3) est soudée à l'aide de l'air chaud qui sort.

8. Dispositif selon la revendication 7, **caractérisé en ce que** le dispositif de scellage (9) comporte un carter (14) pourvu d'au moins une admission d'air (15) qui se ramifie en conduits de répartition (16), lesquels sont reliés par l'intermédiaire de conduits de décharge (19) à au moins un dispositif de chauffage (17 ; 18) qui est lui-même relié par l'intermédiaire de conduits de décharge (20) à un conduit de sortie (21).

9. Dispositif selon la revendication 7 ou 8, **caractérisé en ce que** le conduit de sortie (21) s'étend sur une certaine longueur dans le sens longitudinal de la gaine tubulaire (3).

10. Dispositif selon l'une des revendications 7 à 9, **caractérisé en ce que** le dispositif de scellage (9) est disposé à une distance définie de la gaine tubulaire (3) et ne touche pas celle-ci.

11. Dispositif selon l'une des revendications 7 à 10, **caractérisé en ce que** le dispositif de chauffage (17 ; 18) se compose d'une cartouche chauffage à commande électrique.

12. Dispositif selon l'une des revendications 7 à 11, **caractérisé en ce qu'**un capteur de température (23) est disposé dans la zone du conduit de sortie (21).
